# EUROPEAN PATENT APPLICATION

(11) **EP 3 462 556 A1**
(43) Date of publication of application: **03.04.2019**
(21) Application number: 18197063.3
(22) Date of filing: 27.09.2018
(51) Int. Cl.: H02G 3/04, F16L 3/22, F16L 3/26

(54) **CABLE TRAY**

(30) Priority: 02.10.2017 DK PA201770742
(71) Applicant: Siltec A/S, 8600 Silkeborg (DK)
(72) Inventor: Gasbjerg, Frank Hviid, 8660 Skanderborg (DK)
(74) Representative: Nielsen, Leif

(57) **Abstract**

The present invention concerns a cable tray with a number of juxtaposed U-bent wires and longitudinal wires fastened thereto such that a bottom and side walls for the cable tray are formed. It is an object of the invention to provide a cable tray in which the individual cables are disposed with a spacing such that cleaning between cables is possible. This can be achieved by a cable tray in that cable fastening means in the form of bent wire sections are fastened to the U-bent wires either directly or indirectly, the wire sections being designed with cable apertures, the wire sections mounted with a spacing on the U-bent wires in order to ensure a cleaning-friendly spacing between the cables. Hereby can be achieved that cables or hoses are fixed in a cable tray by means of the bent wire sections. The advantage of the cables being disposed with a spacing in the cable tray is that it becomes possible to clean the cables in the cable tray, as it will be possible to clean the surface of the cables e.g. by high pressure flushing with either water or steam or chemical cleaning agents.

## Description

### Field of the Invention

The present invention concerns a cable tray for carrying cables or hoses and of the type made of wire material with a number of juxtaposed U-bent wires and longitudinal wires fastened thereto such that a bottom and side walls for the cable tray are formed.

### Background of the Invention

DK178644 B9 discloses a cable tray for carrying cables and hoses and of the type made of wire material with a number of juxtaposed U-bent wires and longitudinal wires fastened thereto such that a bottom and side walls for the cable tray are formed.

From US 5,893,539 is known a cable tray of the kind mentioned in the introduction. In this type of cable tray, wires bent into bracket shape are used. These wires cannot easily be bent for positioning cables or hoses in the cable tray.

DE 195 31 658 A1 includes a cable tray with a bottom and two sides formed of longitudinal stiff wires, to which longitudinal wires U-shaped wires are secured with spacing. Cables are fastened with cable strips in order to ensure spacing between the cables in the cable tray.

The cable tray shown in DE 195 31 658 A1 can ensure spacing between cables. Complete cleaning is difficult or impossible between cable clips and cables.

### Object of the Invention

It is an object of the invention to provide a cable tray in which the individual cables are disposed with a spacing such that cleaning between cables is possible.

### Description of the Invention

The object of the invention can be achieved by a cable tray of the kind indicated in the introduction, which is peculiar in that cable fastening means in the form of bent wire sections are fastened to the U-bent wires either directly or indirectly, the wire sections being designed with cable apertures, the wire sections mounted with a spacing on the U-bent wires in order to ensure a cleaning-friendly spacing between the cables.

Hereby can be achieved that cables or hoses are fixed in a cable tray by means of the bent wire sections ensuring that the cables are retained with mutual spacing. The advantage of the cables being disposed with a spacing in the cable tray is that it becomes possible to clean the cables in the cable tray, as it will be possible to clean the surface of the cables e.g. by high pressure flushing with either water or steam or chemical cleaning agents. At the same time the cable tray is made of wires that can be cleaned in the same way when performing an actual cleaning of the cable tray. This is crucial if the cable tray is to be used e.g. in the food industry or in chemical industry, including the biochemical industry. Other places where it may be just as important with a very careful cleaning are in clean-room production which is widely used e.g. in the production of semiconductors.

By means of the special design of a cable tray where the cables are ensured a spacing, there is also achieved a better heat conduction away from the cable in the case of power cables that have a certain power deposition. Also, spacing between the cables can mean a reduction of possible noise transmission between cables, where in some cables there may be a relatively high power transmission while other cables are pure signal cables.

If cables lie very close, a capacitive transmission of noise can arise from various cable types, which to a certain extent may disturb possible signal communication. Within production plants where the production is to take place in consideration of sterility, in many cases there will be a very large number of signal cables that are to transmit signals for monitoring and controlling process facilities. By ensuring a physical distance between the individual cables, a reduction of the capacitive transmission of possible noise between signal cables and power cables used for power regulation of motors, pumps or valves will therefore be provided.

In a preferred embodiment of the invention, the longitudinal wires can be fastened externally on the U-bent wires. Hereby can be achieved that the external longitudinal wires will be in contact with a possible wall on which the cable tray is to be suspended. This means that fastening of the cable tray can be provided with fastening means fastened to the longitudinal wires, thus achieving efficient fastening of the cable tray.

In a further preferred embodiment of the invention, the longitudinal wires can be fastened internally on the U-bent wires. Hereby can be achieved that it will be more simple to produce the cable tray as the U-bent wires are just secured in a fixture after which the longitudinal wires are possibly spot welded to the U-shaped wires. Fastening to the wall by means of fastening means can therefore now be performed with the U-bent wires.

In a further preferred embodiment of the invention, the wire can be made of stainless steel. This is particularly suited for cable trays that are to be cleaned. e.g. by flushing with a water jet, for example from a high-pressure cleaner. The cable tray is normally made of metal wires, including particularly corrosion-proof materials of e.g. steel, steel alloys such as AISI 316 or 304, and/or hot- or electro-galvanised steel, aluminium, aluminium alloys, or similar cleaning-friendly materials. Cleaning-friendly cable trays are achieved thereby, and since the cable trays are made of wire it is also possible to clean the cables mounted in the trays without needing to disassemble the cable trays. It is thereby possible to use the cable trays in conditions where frequent cleaning is required, e.g. due to official requirements such as in pharmaceutical industry and food industry, including slaughterhouses.

The wires in the cable tray are soldered or welded together in the points of contact where two wires are crossing each other. However, it is also possible to make the cable tray of wires of dimensionally stable plastic which is welded or glued together.

In a further preferred embodiment of the invention, the wire thickness will typically be 2-24 mm, depending on the size of the cable tray and desired load capacity for tube/hose or the cable tray and thereby the weight to be carried by the cable tray. The longitudinal wires will usually have a greater diameter than the U-bent wires.

In a further preferred embodiment of the invention, the wire thickness can be 3 mm, and the wire can have a tensile strength of 840 - 900 N/mm². Such a wire can be bent manually without use of tools and will be dimensionally stable in bent condition. It is preferred to use longitudinal wires having greater diameter, typically Ø4 mm, together with the former.

In a further preferred embodiment of the invention, cable fastening means in the form of bent wire sections can be designed with a central section extending along the U-bent wires, where the central section is fastened to the U-bent wires, the bent wire sections being designed with a first wire end and a second wire end extending mutually displaced in order to enable cable passage when cables are to be placed in the cable tray. It can hereby be achieved that the cables by simple bending can be pressed into the bent wire sections and thereby become fixed at the desired position. In a further advantageous embodiment, the bent wire sections can be adapted to different hose or cable thicknesses such that the bent wire sections are provided in different dimensions. In that the wire sections in this way will ensure the cables being disposed with a physical spacing, there is achieved, as previously mentioned, a cleaning-friendly cable tray that advantageously can be cleaned either by high-pressure flushing or other kind of flushing with cleaning agents.

In a further preferred embodiment of the invention, the width of the U-bent wires can determine the number of longitudinal wires. The width of the U-bent wires can thus be variable, depending on the desired width of the cable tray. The cable tray will typically be designed with longitudinal wires at the outer edges and at least one wire at the bottom of the cable tray, though by larger cable trays there will be naturally be a greater number of longitudinal wires. Thus there is no fixed limit to how wide the cable tray can be designed.

### Description of the Drawing

- Fig. 1: shows a sectional view of a possible cable tray.
- Fig. 2: shows a possible embodiment of one of the bent wire sections.
- Fig. 3: shows the same as Fig. 2, but seen from above instead.

### Detailed Description of Embodiments of the Invention

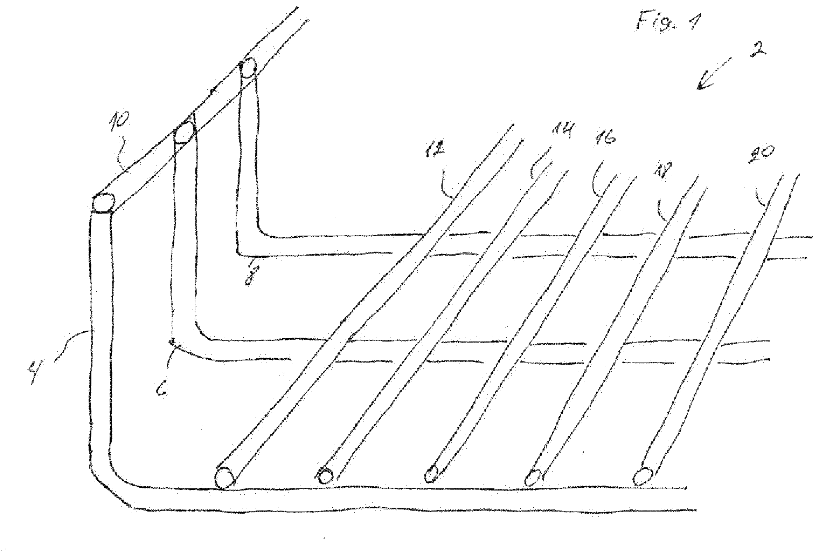

Fig. 1 shows a sectional view of a possible cable tray 2 consisting of a number of U-bent wires 4-8 that are joined by means of longitudinal wires, where at the top is shown a longitudinal wire 10 fastened in connection with an uppermost end face of the U-shaped wires, the longitudinal wires 12-20 forming a bottom in the cable tray. The joint between the U-bent wires 4-8 and the longitudinal wires 12-20 can be performed by a form of spot welding, where the objects are pressed hard against each other simultaneously with a very strong current is running through the contact faces.

Thus it will be possible here to make narrow cable trays 2 with only a few longitudinal wires designated 12-20, whereas larger cable trays can have a far greater number of longitudinal wires and the U-bent wires 4-8 can be designed such that their mutual spacing is greater.

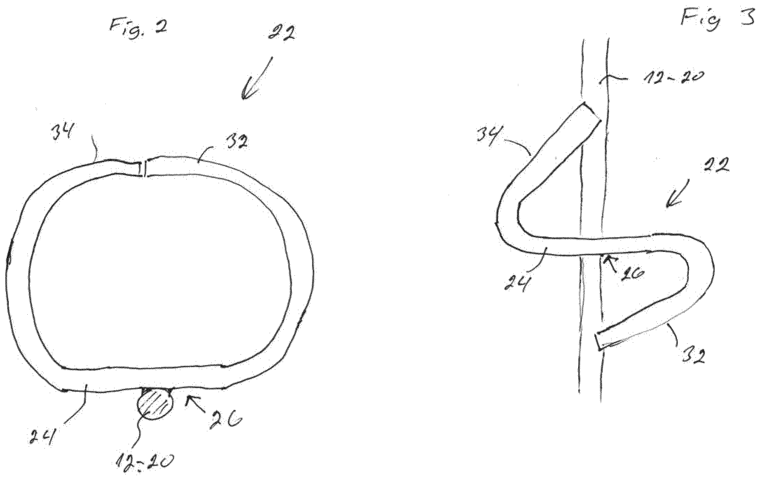

Fig. 2 shows a possible embodiment of one of the bent wire sections 22. The bent wire section 22 has a horizontal face 24 which is here fastened by a welding 26 to a longitudinal wire of the type shown on Fig. 1 with the number 12-20.

The two wire ends 32 and 34 are shown beside each other in a side view, but the two wire ends 32 and 34 are twisted relative to each other such that between them is formed a direct cable opening.

On Fig. 2 is shown that the bent wire section 22 is fastened to one of the longitudinal wires 12-20, and it can be envisaged that the horizontal part 24 of the bent wire section 22 is passed partly in parallel with one of the U-bent wires 6 or 8, and that a spot welding is performed here. This may be expedient if the longitudinal wires 12-20 are instead passed down under the U-shaped wires 4-8.

Fig. 3 shows the same embodiment as Fig. 2 but seen from above instead, and therefore the bent wire section 22 now appears such that it can be clearly seen that the two wire ends 32 and 34 are bent in each their direction. Also, the horizontal part 24 connecting the wire ends 32 and 34 are here shown fastened by welding 26 on one of the longitudinal wires 12-20.

By means of the bent wire sections 22 it is possible to place cables in the cable tray 2 with a defined spacing such that the new cable trays become extremely cleaning-friendly. Even if the cable tray is suspended on a wall, there will still be a passage between cables and wall defined by the thickness of the wires which automatically ensure spacing. This means that even behind the cables an efficient cleaning is enabled.

### Reference numbers:

cable tray 2
U-bent wires 4-8
longitudinal wire 10
longitudinal wires 12-20
bent wire sections 22
central section 24
welding 26
first wire end 32
second wire end 34

## Claims

1. A cable tray (2) for carrying cables or hoses and of the type made of wire material with a number of juxtaposed U-bent wires (4-8) and longitudinal wires (12-20) fastened thereto such that a bottom and side walls for the cable tray are formed, **characterised in that** cable fastening means in the form of bent wire sections (22) are fastened to the U-bent wires directly or indirectly, the wire sections (22) designed with cable apertures, the wire sections (22) mounted with a spacing on the U-bent wires (4-8) in order to ensure a cleaning-friendly spacing between the cables.

2. A cable tray according to claim 1, **characterised in that** indirect fastening of the bent wire sections (22) imply that the bent wire sections (22) are fastened by welding to the longitudinal wires (12-20) that are fastened to the U-bent wires (4-8) by welding.

3. A cable tray according to claim 1 or 2, **characterised in that** the longitudinal wires (12-20) are fastened externally on the U-bent wires (4-8).

4. A cable tray according to one of claims 1-3, **characterised in that** the longitudinal wires (12-20) are fastened internally on the U-bent wires (4-8).

5. A cable tray according to one of claims 1-4, **characterised in that** the wires are made of stainless steel.

6. A cable tray according to one of claims 1-5, **characterised in that** the wire thickness is 2 - 25 mm.

7. A cable tray according to claim 6, **characterised in that** the wire thickness is 3 mm, and that the wire has a tensile strength of 840-900 N/mm².

8. A cable tray according to one of claims 1-7, **characterised in that** cable fastening means in the form of bent wire sections (22) are designed with a central section (24) extending along the U-bent wires (4-8) or along the longitudinal wires (12-20), the central section (24) being fastened directly to the U-bent wires (6,8) or indirectly via the longitudinal wires (12-20), the bent wire sections (22) being designed with a first wire end (32) and a second wire end (34) extending mutually displaced in order to enable cable passage when cables are to be placed in the cable tray (2).
